(19) **Europäisches Patentamt / European Patent Office / Office européen des brevets**

(11) **EP 4 209 813 A1**

(12) # EUROPEAN PATENT APPLICATION
published in accordance with Art. 153(4) EPC

(43) Date of publication:
**12.07.2023 Bulletin 2023/28**

(21) Application number: **21864210.6**

(22) Date of filing: **25.08.2021**

(51) International Patent Classification (IPC):
**G02B 6/44** (2006.01)

(52) Cooperative Patent Classification (CPC):
**G02B 6/44**

(86) International application number:
**PCT/JP2021/031193**

(87) International publication number:
**WO 2022/050152 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2020 JP 2020147729**

(71) Applicants:
- **Fujikura Ltd.**
  **Tokyo 135-8512 (JP)**
- **Nippon Telegraph And Telephone Corporation
  Chiyoda-ku
  Tokyo 100-8116 (JP)**

(72) Inventors:
- **KANEKO Soichiro**
  **Sakura-shi, Chiba 285-8550 (JP)**
- **OHNO Masatoshi**
  **Sakura-shi, Chiba 285-8550 (JP)**
- **NAMAZUE Akira**
  **Sakura-shi, Chiba 285-8550 (JP)**
- **OSATO Ken**
  **Sakura-shi, Chiba 285-8550 (JP)**
- **YAMADA Yusuke**
  **Musashino-shi, Tokyo 180-8585 (JP)**
- **MARUO Yuta**
  **Musashino-shi, Tokyo 180-8585 (JP)**
- **SAKURAI Akira**
  **Musashino-shi, Tokyo 180-8585 (JP)**
- **TETSUTANI Shigekatsu**
  **Musashino-shi, Tokyo 180-8585 (JP)**
- **TANIOKA Hiroaki**
  **Musashino-shi, Tokyo 180-8585 (JP)**

(74) Representative: **Plasseraud IP
66, rue de la Chaussée d'Antin
75440 Paris Cedex 09 (FR)**

(54) **OPTICAL FIBER CABLE**

(57) An optical fiber cable includes a sheath, a core containing a plurality of optical fibers in a state where the optical fibers are twisted together and are packed in an accommodation space in the sheath, in which each of the plurality of optical fibers contains a glass portion, a primary layer that covers the glass portion, and a secondary layer that covers the primary layer, and a value of an index Q is less than 20, and a fiber pulling force when pulling out the optical fiber is equal to or greater than 15N/10m.

EP 4 209 813 A1

# FIG. 1

**Description**

Field of the Invention

The present invention relates to an optical fiber cable.
Priority is claimed on Japanese Patent Application No. 2020-147729, filed September 2, 2020, the contents of which are incorporated herein by reference.

Description of Related Art

Patent Literature 1 discloses an optical fiber cable that includes a filling material (string like) disposed so as to come into contact with an optical fiber, and movement of the optical fiber is suppressed due to the filling material.

[Citation List]

[Patent Literature]

[Patent Literature 1] Japanese Unexamined Patent Application, First Publication No. 2014-139609

SUMMARY OF THE INVENTION

[Technical Problem]

When frictional forces acting on an optical fiber disposed on an inside of the optical fiber cable are too small, on an end portion of the optical fiber cable in a longitudinal direction, the optical fiber protrudes from a sheath, exceeding an allowable range. By stuffing the inside of the optical fiber cable with a filling material, it is possible to adjust the frictional forces acting on the optical fiber. However, even if the desired frictional forces are attained, characteristics of light transmission during actual use conditions decrease in the case where the amount of stuffing of the filling material is inappropriate.
The present invention has been made in consideration of such circumstances, where the objective is to provide an optical fiber cable that maintains the frictional forces acting on the optical fiber, while attaining good light transmission characteristics during actual use conditions.

[Solution to Problem]

To solve the problem mentioned above, an optical fiber cable according to an embodiment of the present invention, includes a sheath, a core containing a plurality of optical fibers in a state where the optical fibers are twisted together and are packed in an accommodation space in the sheath, in which each of the plurality of optical fibers contains a glass portion, a primary layer that covers the glass portion, and a secondary layer that covers the primary layer, and a value of an index Q is less than 20, and a fiber pulling force when pulling out the optical fiber is equal to or greater than 15N/10m.

[Advantageous Effects of Invention]

According to an above aspect of the present invention, it is possible to provide an optical fiber cable that preserves the frictional forces acting on the optical fiber, while achieving good light transmission characteristics during actual use conditions.

BRIEF DESCRIPTION OF THE DRAWINGS

FIG. 1 is a transverse cross sectional view of an optical fiber cable of a present embodiment.
FIG. 2 is a detailed transverse cross sectional view of an optical fiber in FIG. 1.
FIG. 3 is a graph showing a relationship between packing density and transmission loss when a filling material is not provided.
FIG. 4 is a graph used to derive an index C1.
FIG. 5 is a graph used to derive an index C2.

FIG. 6 is a graph used to derive an index C3.
FIG. 7 is a graph used to derive an index C4.

## DETAILED DESCRIPTION OF THE INVENTION

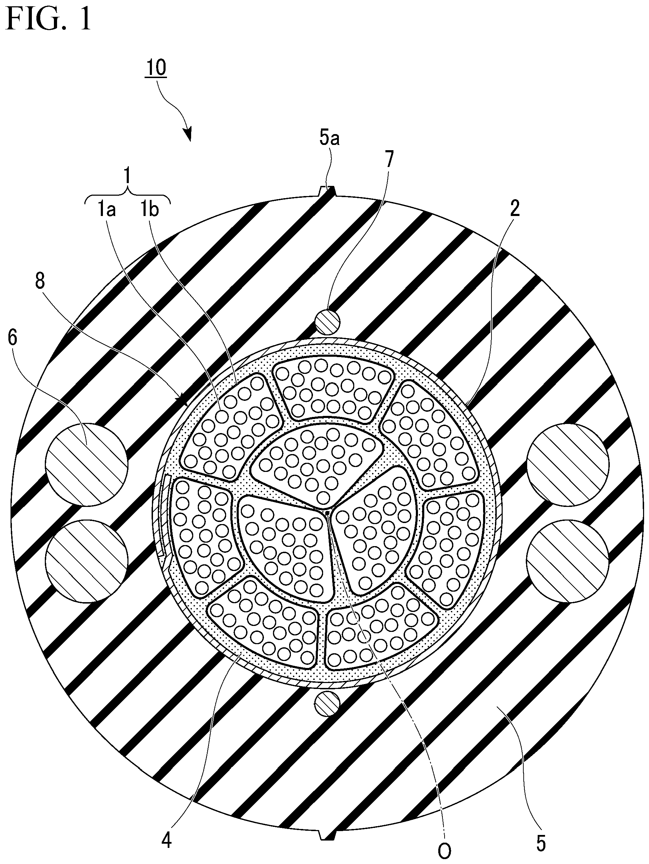

As shown on FIG. 1, a present embodiment of an optical fiber cable 10 is provided with a core 8 including a plurality of optical fibers 1a, a filling material 4, and a sheath 5 that covers the core 8.

In the present embodiment, a central axis of the sheath 5 is referred to as central axis O, a direction along the central axis O is a longitudinal direction, and a cross-section that is orthogonal to the longitudinal direction is referred to as a transverse cross-section. An area of the transverse cross-section is referred to as a transverse cross-sectional area. Also, on a transverse cross sectional view, a direction that crosses the central axis O is referred to as a radial direction, and a direction that goes around the central axis O is referred to as a circumferential direction.

The core 8 includes a plurality of optical fiber units 1 each including a plurality of the optical fibers 1a, and a wrapping tube 2 wrapping the optical fiber units 1. The plurality of the optical fiber units 1 may be twisted together in an SZ shape or a spiral shape, and are wrapped with the wrapping tube 2. The plurality of the optical fibers 1a included in the optical fiber unit 1 may be twisted together in an SZ shape or a spiral shape, or they may not be twisted together. Furthermore, the core 8 may be configured of one optical fiber unit 1 being wrapped by the wrapping tube 2.

As the wrapping tube2, a non-woven fabric, polyester, or the like may be used. Also, as the wrapping tube 2, a water absorbent tape that contributes to the water absorbability of the non-woven fabric, polyester, or the like may be used. In this case, it is possible to enhance the water absorption performance of the optical fiber cable 10. Furthermore, the core 8 may not include the wrapping tube 2, and the optical fiber unit 1 may be in contact with the filling material 4. In other words, the filling material 4 may be used as the wrapping tube 2. However, when the wrapping tube 2 is included, because the falling apart of the optical fiber unit 1 that occurs at the time of manufacturing is suppressed, it is possible to provide the core 8 on the inside of the sheath 5 more easily.

The present embodiment of the optical fiber unit 1 includes a plurality of the optical fibers 1a, and a binding material 1b to bundle the optical fibers 1a. An optical fiber core wire, an optical fiber, an optical fiber ribbon and the like may be used as the optical fiber 1a. As one type of the optical fiber ribbon, the plurality of the optical fibers 1a may constitute, in other words, an intermittently-fixed optical fiber ribbon. On the intermittently-fixed optical fiber ribbon, the plurality of the optical fibers 1a, when pulled in a direction orthogonal to the direction to which they extend, are glued together so as to expand in a mesh like shape (spider web like shape). More specifically, a single optical fiber 1a is attached to adjacent optical fibers 1a on both sides, on varying positions along the longitudinal direction with respect to the optical fiber 1a. Also, the adjacent optical fibers 1a are attached together in a regular interval on the longitudinal direction.

Furthermore, the aspect of the optical fibers 1a included in the core 8 is not limited to an intermittently-fixed optical fiber ribbon, and may be changed accordingly.

The binding material 1b may be string like, sheet like, or tube like. The binding material 1b extends in the longitudinal direction, and is disposed to bundle a plurality of the optical fibers 1a included in one of the optical fiber units. Also, a plurality of the optical fibers 1a may be wrapped by the wrapping tube 2 as is (in other words, without constituting an optical fiber unit) without being bundled.

In other words, each of the optical fiber units 1 may be formed by twisting together and bundling the plurality of the optical fibers 1a. In this case, the optical fiber unit 1 may not include the binding material 1b.

Furthermore, as in FIG. 1 and the like, a cross-sectional shape of the optical fiber unit 1 is arranged. But due to the movement of the optical fiber 1a inside of the optical fiber unit 1, there are cases where the arrangement of the cross-sectional shape is changed. Also, as in FIG. 1 and the like, three of the optical fiber units 1 form the inner layer, and seven of the optical fiber units 1 form the outer layer. However, a portion of the outer layer may penetrate the inner layer. In other words, the optical fiber unit 1 may not form these layers.

Also, in FIG. 1 and the like, although a plurality of the optical fiber unit 1 may be evenly placed with spaces in between, having no spaces in between, or having placement be uneven. Or the shape of the core 8 may be arranged where the filling material 4 is inserted in between the optical fiber units 1.

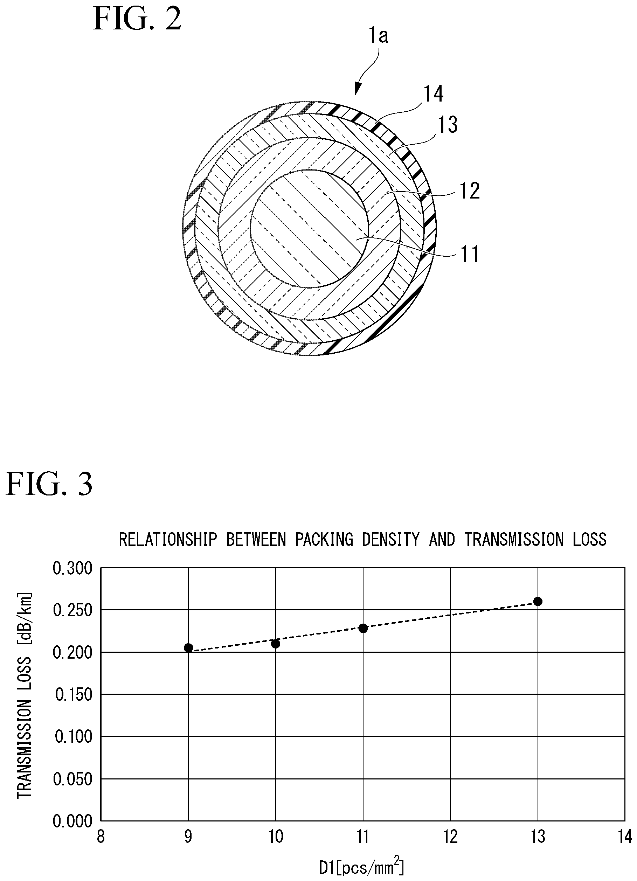

As shown on FIG. 2, the optical fiber 1a includes a glass portion 11, a primary layer 12, a secondary layer 13 and a colored layer 14.

The glass portion 11, for example, may be formed from silica glass that transmits light. The primary layer 12 may be formed from resin (UV curable resin for example), and covers the glass portion 11. The secondary layer 13 may be formed from resin (UV curable resin for example), and covers the primary layer 12. The colored layer 14 may be formed from colored resin (UV curable resin for example) and is disposed on the outside of both the primary layer 12 and the secondary layer 13.

Furthermore, the colored layer 14 may not be disposed. Also, coloring may be applied to the secondary layer 13, so that the secondary layer 13 itself is used as a colored layer.

Each of the primary layer 12, the secondary layer 13, and the colored layer 14 may be formed from similar or differing specific materials. As an example, a UV curable resin, acrylate resin or the like may be used.

As shown on FIG. 1, two rip cords 7 and four tension members 6 are contained within the sheath 5. However, the quantity of the rip cords 7 and the tension members 6 may be changed. Or, the rip cords 7 and the tension members 6 may not be disposed.

For the rip cord 7 used to tear off the sheath 5, a synthetic fiber such as polyester or the like may be used. Also, for the rip cord 7, a rod made of a polypropylene (PP) or a nylon or the like may be used. For the material of the tension member 6, for example, a metallic wire (steel wire or the like) or an FRP (Fiber Reinforced Plastic) or the like may be used.

The sheath 5 covers the core 8. In other words, the sheath 5 contains a space to accommodate the core 8. The accommodation space of the present embodiment is an entire region enclosed by an inner circumferential surface of the sheath 5. As for the material of the sheath 5, a polyolefin (PO) resin such as polyethylene (PE), polypropylene (PP), ethylene ether acrylate copolymer (EEA), ethylene vinyl acetate copolymer (EVA), ethylene propylene copolymer (EP), or polyvinyl chloride (PVC) may be used. Also, a compound (alloy, mixture) of the above resins may be used.

On the outer surface of the sheath 5, a marking portion 5a indicating the position of the rip cord 7 may be provided. As shown on FIG. 1, the marking portion 5a may be a protrusion that sticks out on the outside in the radial direction, or a marking that is painted thereon, and the like. The marking portion 5a may not be disposed if for example, the position of the rip cord 7 is identified via the bending direction of the optical fiber cable 10 brought upon by the tension member 6.

The filling material 4, on the inside portion of the sheath 5, is disposed so that it is in contact with the optical fiber unit 1. For example, when the binding material 1b is string like or when the binding material 1b does not exist, the filling material 4 may be in direct contact with the optical fiber 1a. Or, when the binding material 1b is tubular, the filling material 4 may be in contact with the binding material 1b while not contacting the optical fiber 1a. In either case, by having the filling material 4 be in contact with the optical fiber 1a, the filling material 4 acts as a cushion, suppressing micro-bends that may develop in the optical fiber 1a. Also, frictional forces acting on the optical fiber unit 1 may be adjusted via the filling material 4. Frictional forces may act on the optical fiber 1a via the binding material 1b, or may act directly on the optical fiber 1a. As an example of the filling material 4, if it is a material with cushioning properties, any material may be used. As a concrete example of the filling material 4, polyester fiber, aramid fiber, glass fiber and so on may be mentioned. Furthermore, the filling material 4 may be made up of yarn and the like, having water absorbability. In this case, it is possible to improve the water resistibility of the optical fiber cable 10.

It is desirable to maximize the quantity of the optical fibers 1a included in the optical fiber cable 10, while decreasing transmission losses. In high packing density implementations of the optical fibers 1a, lateral forces acting on the optical fiber cable 10 easily cause micro-bends. In such cases, decreasing the packing density of the optical fibers 1a (for example, making the space inside the sheath 5 larger) may be thought of. But, simply decreasing the packing density of the optical fibers 1a, the frictional forces acting on the optical fiber 1a decrease, making the incidence of untwisting in the optical fibers 1a easier. When untwisting occurs, a shortage in the extra length rate of the optical fibers 1a inside the optical fiber cable 10 occurs, and the elongation strain of the optical fibers 1a that occurs is connected to an increase in optical losses. Also, when frictional forces acting on the optical fibers 1a are too small, the optical fiber 1a on the end portion in the longitudinal direction of the optical fiber cable 10 protrudes out from the sheath 5, exceeding the allowable range.

Furthermore, the frictional forces acting on the optical fiber 1a are the frictional forces that develop between the optical fiber 1a and the elements in touch with the optical fiber 1a. For example, the frictional forces may develop between the adjacent optical fibers 1a, or between the optical fiber 1a and other materials in touch with the optical fiber 1a.

According to non-patent literatures 1 to 3 below, losses due to micro-bends tend to be affected by both the geometry (structure) of the optical fiber 1a and the optical properties.

Non-Patent Literature 1: J. Baldauf, et al., "Relationship of Mechanical Characteristics of Dual Coated Single Mode Optical Fibers and Microbending Loss," IEICE Trans. Commun., vol. E76-B, No. 4, 1993.

Non-Patent Literature 2: K. Petermann, et al., "Upper and Lower Limits for the Microbending Loss in Arbitrary Single-Mode Fibers," J. Lightwave technology, vol. LT-4, no. 1, pp. 2-7, 1986.

Non-Patent Literature 3: P. Sillard, et al., "Micro-Bend Losses of Trench-Assisted Single-Mode Fibers," ECOC2010, We.8.F.3, 2010.

According to non-patent literatures 1 to 3 mentioned above, it is possible to express the effect that the geometry of the optical fiber 1a has on micro-bend losses as the geometric loss factor $F_{\mu BL\_G}$ obtained from equation (1) shown below. Definitions of each parameter used in equation (1) are as follows:

Hf: bending stiffness of the glass portion 11 of the optical fiber 1a (Pa $m^4$)
$D_0$: deformation resistance of the secondary layer 13 (Pa)
$H_0$: bending stiffness of the secondary layer 13 (Pa $m^4$)

$\mu$: predetermined constant

$E_P$: young's modulus of the primary layer 12 (MPa)

$d_f$: outer diameter of the glass portion 11 ($\mu$m)

$t_P$: thickness of the primary layer 12 ($\mu$m)

$E_g$: young's modulus of the glass portion 11 (GPa)

$R_S$: radius of the outer periphery surface of the secondary layer 13 ($\mu$m)

$t_S$: thickness of the secondary layer 13 ($\mu$m)

$E_S$: young's modulus of the secondary layer 13 (MPa)

$R_P$: radius of the outer periphery of the primary layer 12 ($\mu$m)

Furthermore, $t_P = R_P - df / 2$, and $t_S = R_S - R_P$.

[Equation 1]

$$F_{\mu BL\_G} = \frac{K_s}{H_f^2 \times D_0^{1.125 - 0.25\mu} H_0^{(2\mu - 1)/8}} \quad \cdots (1)$$

$$K_s = \frac{E_p d_f}{t_p} , H_f = \frac{\pi}{4} E_g \left(\frac{d_f}{2}\right)^4 , D_0 = E_p + \left(\frac{t_s}{R_s}\right)^3 E_s , H_0 = \frac{\pi}{4} E_s \left(R_s^4 - R_p^4\right)$$

Referring to non-patent literatures 1 to 3 mentioned above, it is possible to express the effect that the optical properties of the optical fiber 1a has on micro-bend losses as the optical properties loss factor $F_{\mu BL\_\Delta\beta}$ obtained from equation (2) shown below. Definitions of each parameter used in equation (2) are as follows:

$\Delta\beta$: the difference between the propagation constant in a waveguide mode of transmitted light that propagates in the optical fiber 1a, and the propagation constant of the radiation mode. Units are (rad/m). The "radiation mode" is a higher order mode with respect to the possible propagation waveguide mode of the optical fiber 1a.

p: predetermined constant.

[Equation 2]

$$F_{\mu BL\_\Delta\beta} = \frac{1}{(\Delta\beta)^{2p}} \quad \cdots (2)$$

According to non-patent literature 4 below, a typical value of constant $\mu$ in equation (1) is 3. As such, equation (1) becomes equation (3) shown below. Non-Patent Literature 4: K. Kobayashi, et al., "Study of Microbending loss in thin coated fibers and fiber ribbons," IWCS, pp.386-392, 1993.

[Equation 3]

$$F_{\mu BL\_G} = \frac{K_s}{H_f^2 \times D_0^{0.375} H_0^{0.625}} \quad \cdots (3)$$

$$K_s = \frac{E_p d_f}{t_p} , H_f = \frac{\pi}{4} E_g \left(\frac{d_f}{2}\right)^4 , D_0 = E_p + \left(\frac{t_s}{R_s}\right)^3 E_s , H_0 = \frac{\pi}{4} E_s \left(R_s^4 - R_p^4\right)$$

According to the above-mentioned non-patent literature 2, and non-patent literature 5 below, a typical value of constant p in equation (2) is 4. As such, equation (2) becomes equation (4) shown below.

Non-Patent Literature 5: C. D. Hussey, et al., "Characterization and design of single-mode optical fibres," Optical and Quantum Electronics, vol. 14, no. 4, pp. 347-358, 1982.

[Equation 4]

$$F_{\mu BL\_\Delta\beta} = \frac{1}{(\Delta\beta)^8} \qquad \cdots (4)$$

As in equation (4), the value of the optical properties loss factor $F_{\mu BL\_\Delta\beta}$ is the eighth exponent of the inverse proportion of the constant of difference in propagation $\Delta\beta$. From equations (3) and (4), it is understood that the larger the values of the derived geometric loss factor $F_{\mu BL\_G}$ and the optical properties loss factor $F_{\mu BL\_\Delta\beta}$ become, the larger the micro-bend losses of the optical fibers 1a become.

Here, the $\Delta\beta$ of a typical optical fiber (for example, ITU-T G.657.A1 compliant) ranges from 9,900 to 12,000 (rad/m). As opposed to this, low loss optical fibers for long haul transmission (for example, ITU-T G.654.E compliant) have a $\Delta\beta$ value in the range of 9,000 to 10,000 (rad/m). In such low loss optical fibers, because the value of $\Delta\beta$ is small, the optical properties loss factor $F_{\mu BL\_\Delta\beta}$ becomes large, and it is observed that micro-bend losses form easily.

In the optical fiber cable 10, the higher the packing density of the optical fibers 1a in the accommodation space, the easier it is for micro-bend losses to form. The reason is that, when the optical fiber cable 10 is bent for example, the optical fibers 1a are strongly pressed by the other optical fibers 1a, the wrapping tube 2, or the sheath 5, and minute bends (micro-bends) in the optical fibers 1a easily form. If the filling material 4 is accordingly disposed in the surroundings of the optical fibers 1a, the filling material 4 acts as a cushion, decreasing the micro-bends and the micro-bend losses. On the other hand, if the optical fiber cable 10 is stuffed with too much of the filling material 4, the cushioning ability of the filling material 4 declines, so that it cannot effectively decrease the micro-bends and the micro-bend losses.

Therefore, to decrease micro-bend losses, not only does the packing density of the optical fibers 1a need to be considered, but setting the appropriate substantial density of the stuffing amount of the filling material 4 is also required. In addition, as mentioned earlier, other than the stuffing amount of the filling material 4, the micro-bend losses are affected by the geometrical effects, as well as the value of $\Delta\beta$.

With that, after earnest consideration, the inventors of the present invention have quantified the effects the various parameters of the optical fiber cable 10 have on micro-bend losses, and have discovered conditions where it is possible to render the micro-bend losses constantly below a certain level. Details are explained using Table 1 and Table 2 below.

[Table 1]

[Table 2]

| Sample No. | | 1-1 | 1-2 | 1-3 | 1-4 | 1-5 | 1-6 | 1-7 | 1-8 | 1-9 | 1-10 | 1-11 |
|---|---|---|---|---|---|---|---|---|---|---|---|---|
| Complies to Standard No. | | ITU-T G.657.A1 | ITU-T G.652.D | | | | | ITU-T G.654.E | | | | |
| Parameters | Units | | | | | | | | | | | |
| D1 | [pcs/mm$^2$] | 13 | 7 | 8 | 9 | 10 | 13 | 7 | 8 | 9 | 10 | 7 |
| D2 | [d/mm$^2$] | 0 | 0 | 0 | 0 | 0 | 0 | 0 | 0 | 0 | 0 | 200 |
| $\Delta\beta$ | [rad/m] | $1.10 \times 10^4$ | $9.90 \times 10^3$ | $9.90 \times 10^3$ | $9.90 \times 10^3$ | $9.90 \times 10^3$ | $9.90 \times 10^3$ | $9.35 \times 10^3$ | $9.35 \times 10^3$ | $9.35 \times 10^3$ | $9.35 \times 10^3$ | $9.35 \times 10^3$ |
| F$\mu$BL$_{\_\_}\Delta\beta$ | [(rad/$\mu$m)^(-8)] | $4.67 \times 10^{-81}$ | $1.08 \times 10^{16}$ | $1.08 \times 10^{16}$ | $1.08 \times 10^{16}$ | $1.08 \times 10^{16}$ | $1.08 \times 10^{16}$ | $1.71 \times 10^{16}$ | $1.71 \times 10^{16}$ | $1.71 \times 10^{16}$ | $1.71 \times 10^{16}$ | $1.71 \times 10^{16}$ |
| df | [$\mu$m] | 125 | 125 | 125 | 125 | 125 | 125 | 125 | 125 | 125 | 125 | 125 |
| Rp*2 | [$\mu$m] | 190 | 190 | 190 | 190 | 190 | 190 | 190 | 190 | 190 | 190 | 190 |
| Rs*2 | [$\mu$m] | 240 | 240 | 240 | 240 | 240 | 240 | 240 | 240 | 240 | 240 | 240 |
| Eg | [GPa] | 74 | 74 | 74 | 74 | 74 | 74 | 74 | 74 | 74 | 74 | 74 |
| Ep | [MPa] | 0.61 | 0.61 | 0.61 | 0.61 | 0.61 | 0.61 | 0.61 | 0.61 | 0.61 | 0.61 | 0.61 |
| Es | [MPa] | 800 | 800 | 800 | 800 | 800 | 800 | 800 | 800 | 800 | 800 | 800 |
| Hf | [Pa*m^4] | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ | $8.87 \times 10^{-07}$ |
| H0 | [Pa*m^4] | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ | $7.91 \times 10^{-08}$ |
| F$_{\mu BL\_G}$ | [Pa^(-1)*m^(-10.5)] | $4.99 \times 10^{26}$ | $4.99 \times 10^{26}$ | $4.99 \times 10^{26}$ | $4.99 \times 10^{26}$ | $4.99 \times 10^{25}$ | $4.99 \times 10^{26}$ | $4.99 \times 10^{26}$ | $4.99 \times 10^{26}$ | $4.99 \times 10^{26}$ | $4.99 \times 10^{26}$ | $4.99 \times 10^{26}$ |
| C1 | | 1.03 | 1.03 | 1.03 | 1.03 | 1.03 | 1.03 | 1.03 | 1.03 | 1.03 | 1.03 | 0.95 |
| C2 | | 0.87 | 1.23 | 1.23 | 1.23 | 1.23 | 1.23 | 1.76 | 1.76 | 1.76 | 1.76 | 1.76 |
| C3 | | 1.5 | 1.5 | 1.5 | 1.5 | 1.5 | 1.5 | 1.5 | 1.5 | 1.5 | 1.5 | 1.5 |
| C4 | | 1.00 | 1.00 | 1.00 | 1.00 | 1.00 | 1.00 | 1.00 | 1.00 | 1.00 | 1.00 | 0.98 |
| D1 × C1 × C2 × C3 × C4 | | 17.8 | 13.6 | 15.6 | 17.5 | 19.5 | 25.3 | 19.5 | 22.2 | 25.0 | 27.8 | 17.7 |
| Optical Losses | [dB/km] | 0.215 | 0.283 | 0.225 | 0.205 | 0.210 | 0.260 | 0.281 | 0.274 | 0.240 | 0.254 | 0.227 |
| Fiber Pulling Force | [N/10m] | 37.4 | 13.1 | 14.8 | 20.5 | 23.4 | 36.4 | 14.3 | 15.1 | 20.5 | 23.4 | 38.6 |
| Judgment | | OK | NG | NG | OK | OK | NG | NG | NG | NG | NG | OK |

8

| Parameters | Units | 1-12 | 1-13 | 1-14 | 1-15 | 1-16 | 1-17 | 1-18 | 1-19 | 1-20 | 1-21 | 1-22 |
|---|---|---|---|---|---|---|---|---|---|---|---|---|
| Sample No. | | | | | | | | | | | | |
| Complies to Standard No. | | | | | | | ITU-T G.654.E | | | | | |
| D1 | [pcs/mm²] | 7 | 7 | 7 | 7 | 8 | 8 | 8 | 8 | 8 | 9 | 9 |
| D2 | [d/mm²] | 300 | 500 | 1500 | 2000 | 200 | 300 | 500 | 1500 | 2000 | 0 | 0 |
| Δβ | [rad/m] | 9.35×10³ | 9.35×10³ | 9.35×10³ | 9.35×10³ | 9.35×10³ | 9.35×10³ | 9.35×10³ | 9.35×10³ | 9.35×10³ | 9.35×10³ | 9.35×10³ |
| FμBL_Δβ | [(rad/μm)^(-8)] | 1.71×10^16 | 1.71×10^16 | 1.71×10^16 | 1.71×10^16 | 1.71×10^16 | 1.71×10^16 | 1.71×10^16 | 1.71×10^16 | 1.71×10^16 | 1.71×10^16 | 1.71×10^16 |
| df | [μm] | 125 | 125 | 125 | 125 | 125 | 125 | 125 | 125 | 125 | 125 | 125 |
| Rp*2 | [μm] | 190 | 190 | 190 | 190 | 190 | 190 | 190 | 190 | 190 | 190 | 187 |
| Rs*2 | [μm] | 240 | 240 | 240 | 240 | 240 | 240 | 240 | 240 | 240 | 240 | 240 |
| Eg | [GPa] | 74 | 74 | 74 | 74 | 74 | 74 | 74 | 74 | 74 | 74 | 74 |
| Ep | [MPa] | 0.61 | 0.61 | 0.61 | 0.61 | 0.61 | 0.61 | 0.61 | 0.61 | 0.61 | 0.51 | 0.2 |
| Es | [MPa] | 800 | 800 | 800 | 800 | 800 | 800 | 800 | 800 | 800 | 800 | 800 |
| Hf | [Pa·m^4] | 8.87×10^-07 | 8.87×10^-07 | 8.87×10^-07 | 8.87×10^-07 | 8.87×10^-07 | 8.87×10^-07 | 8.87×10^-07 | 8.87×10^-07 | 8.87×10^-07 | 8.87×10^-07 | 8.87×10^-07 |
| H0 | [Pa·m^4] | 7.91×10^-08 | 7.91×10^-08 | 7.91×10^-08 | 7.91×10^-08 | 7.91×10^-08 | 7.91×10^-08 | 7.91×10^-08 | 7.91×10^-08 | 7.91×10^-08 | 7.91×10^-08 | 8.23×10^-08 |
| F_rBL_0 | [Pa^(-1)·m^(-10.5)] | 4.99×10^26 | 4.99×10^26 | 4.99×10^26 | 4.99×10^26 | 4.99×10^26 | 4.99×10^26 | 4.99×10^26 | 4.99×10^26 | 4.99×10^26 | 3.51×10^26 | 5.51×10^25 |
| C1 | | 0.92 | 0.88 | 1.07 | 1.40 | 0.95 | 0.92 | 0.88 | 1.07 | 1.40 | 1.03 | 1.03 |
| C2 | | 1.76 | 1.76 | 1.76 | 1.76 | 1.76 | 1.76 | 1.76 | 1.76 | 1.76 | 1.76 | 1.76 |
| C3 | | 1.5 | 1.5 | 1.5 | 1.5 | 1.5 | 1.5 | 1.5 | 1.5 | 1.5 | 1.3 | 1.0 |
| C4 | | 0.97 | 0.95 | 0.86 | 0.81 | 0.98 | 0.97 | 0.95 | 0.86 | 0.81 | 1.00 | 1.00 |
| D1×C1×C2×C3×C4 | | 17.0 | 15.9 | 17.3 | 21.4 | 20.2 | 19.4 | 18.2 | 19.8 | 24.5 | 21.7 | 16.3 |
| Optical Losses | [dB/km] | 0.214 | 0.210 | 0.217 | 0.238 | 0.236 | 0.212 | 0.208 | 0.220 | 0.240 | 0.235 | 0.211 |
| Fiber Pulling Force | [N/10m] | 45.8 | 53.5 | 71.2 | 101.4 | 40.4 | 50.7 | 60.3 | 80.3 | 108.9 | 20.5 | 20.5 |
| Judgment | | OK | OK | OK | NG | NG | OK | OK | OK | NG | NG | OK |

As shown on Table 1 and Table 2, samples 1-1 to 1-22 of the optical fiber cable 10 are made. In each sample, as the optical fiber 1a, an intermittently-fixed optical fiber ribbon that has been twisted together is used. In Table 1 and Table 2, D1 is the optical fiber 1a packing density (units: pcs/mm²), and is defined by equation (5) below. Definitions of each parameter used in equation (5) are as follows:

N: The quantity of the optical fibers 1a packed in the accommodation space in the sheath 5 (pcs)

S: The transverse cross-sectional area of the accommodation space in the sheath 5 (mm$^2$)

A: The sum of the transverse cross-sectional areas of the material (excluding optical fibers 1a) disposed in the accommodation space of the sheath 5 (mm$^2$).

The value of A in the example of FIG. 1 is the sum of the transverse cross-sectional areas of the wrapping tube 2, the binding material 1b and the filling material 4. The value of S in the example of FIG. 1 is the transverse cross-sectional area of the region enclosed by the inner circumferential surface of the sheath 5.

[Equation 5]

$$D1 = N \div (S - A) \quad \cdots (5)$$

On Table 1 and Table 2, D2 is the packing density (units: d/mm$^2$) of the filling material 4, and is defined by equation (6) below. In equation (6), T is the gross denier value (units: denier) of the filling material 4 in the accommodation space.

[Equation 6]

$$D2 = T \div S \quad \cdots (6)$$

On Table 1 and Table 2, C1 is a coefficient that expresses the effects of the packing density D2 of the filling material 4 on the micro-bend losses. C2 is a coefficient that expresses the effects of $\triangle\beta$ of the optical fibers 1a on the micro-bend losses. C3 is a coefficient that expresses the effects of the geometric loss factor on the micro-bend losses. C4 is a coefficient that expresses the effects of the cushioning ability of the filling material 4 on the micro-bend losses.

Below, the above-mentioned coefficients C1 to C4 are explained.

First, findings in the case where the filling material 4 is not provided, regarding the relationship of the packing density of the optical fibers 1a and the transmission losses are explained. As shown on Table 3, four optical fiber cables 10 are made. The conditions of each of the samples 1-4, 1-5, and 1-6 are the same as those for each sample shown on Table 1 and Table 2. As for sample 1-5', except for an increase in the quantity of the optical fibers 1a as compared to sample 1-5, all other conditions are the same as sample 1-5. On FIG. 3 which is based off of Table 3, under the condition that the filling material 4 is not provided, the value of the transmission loss is substantially proportional to that of the value of D1. From FIG. 3, it is possible to express the relationship between D1 and the transmission loss as the equation y = 0.0144x+0.0713 (hereupon referred to as the "conversion formula").

[Table 3]

| Sample No. | D1[pcs/mm$^2$] | Transmission [dB/km] Loss |
|---|---|---|
| 1-4 | 9 | 0.205 |
| 1-5 | 10 | 0.210 |
| 1-5' | 11 | 0.228 |
| 1-6 | 13 | 0.260 |

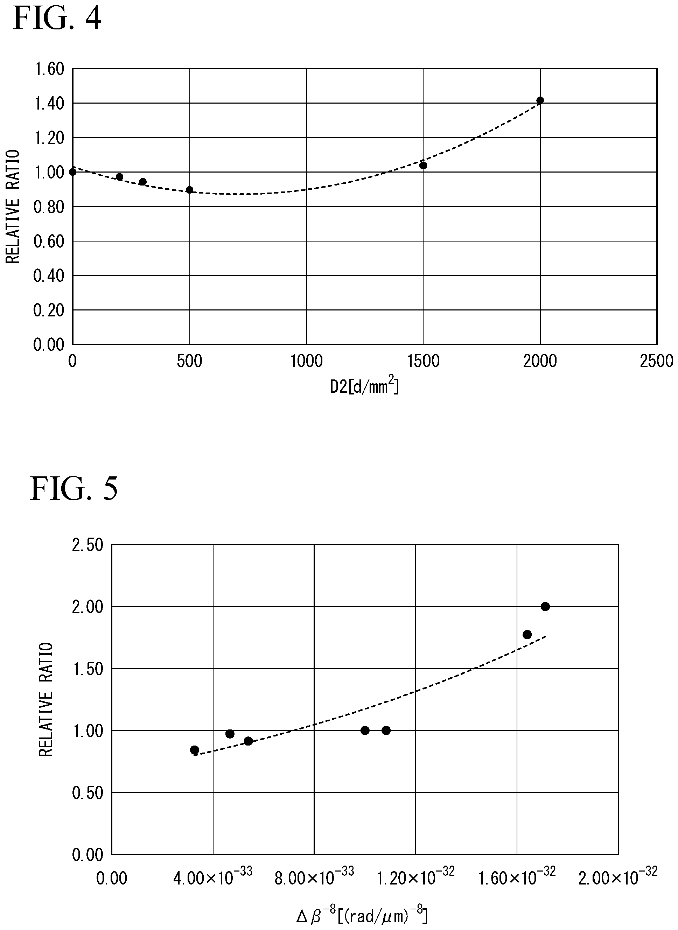

The coefficient C1 is derived from the shown below Table 4 and FIG. 4. As shown on Table 4, samples 3-1 to 3-6 of the optical fiber cable 10 are made. In sample 3-1, no filling material 4 is provided, and the packing density D1 of the optical fibers 1a is 10.6 (pcs/mm$^2$). In samples 3-2 to 3-6, the quantity of the optical fibers 1a (N) and the sum of the accommodation space transverse cross-sectional areas of the sheath 5 (S) are the same as those of sample 3-1, except that the filling material 4 is stuffed. Also, the amount of stuffing of the filling material 4 in samples 3-2 to 3-6 is different from each other. For this reason, the packing density D2 of the filling material 4 differs for each of the samples 3-1 to 3-6. As shown on Table 4, the transmission loss of each of the samples 3-1 to 3-6 has been measured.

[Table 4]

| Sample No. | D2[d/mm$^2$] | Transmission [dB/km] Loss | D1' [pcs/mm$^2$] | Relative Ratio |
|---|---|---|---|---|
| 3-1 | 0 | 0.224 | 10.6 | 1.00 |
| 3-2 | 200 | 0.220 | 10.3 | 0.97 |
| 3-3 | 300 | 0.215 | 10 | 0.94 |
| 3-4 | 500 | 0.208 | 9.5 | 0.90 |
| 3-5 | 1500 | 0.230 | 11 | 1.04 |
| 3-6 | 2000 | 0. 287 | 15 | 1.42 |

On table 4, [D1'] is the value of the apparent packing density of the optical fibers 1a obtained from plugging in the measured result of the transmission loss into the conversion formula previously mentioned. Regarding sample 3-1, because D2 = 0, in other words, the condition is that no filling material 4 is to be provided, the value of D1 (the actual optical fiber 1a packing density), and the value of D1' (value of the apparent packing density taking into account the effect of the filling material 4) become equal. On the other hand, if for example the transmission loss of sample 3-2 (0.220dB/km) were to be substituted as y in the conversion formula mentioned earlier, the value of x would be 10.3. Thus, the values of x obtained as such are what become the values of the apparent packing density D1' of the optical fiber 1a.

The [Relative Ratio] shown on Table 4 is ratio of the values of each of the samples 3-1 to 3-6 against the value of D1' of sample 3-1 (10.6). For example, because D1' = 9.5 for sample 3-4, the relative ratio is 9.5-10.6 = 0.90.

The horizontal axis of FIG. 4 is D2 of Table 4, while the vertical axis of FIG. 4 is the [Relative Ratio] of Table 4. The graph on FIG. 4 is approximated using y = 3.17×10$^{-7}$x$^2$-4.50×10$^{-4}$x+1.03. Setting the coefficient C1 to the value of y in this approximation equation, and D2 to be the value of x, equation (7) below is obtained. The coefficient C1 derived from equation (7) is a quantified value of the effect that the packing density D2 of the filling material 4 has on the micro-bends.

[Equation 7]

$$C1 = 3.17 \times 10^{-7} \times (D2)^2 - 4.50 \times 10^{-4} \times D2 + 1.03 \qquad \cdots (7)$$

The coefficient C2 is derived from the below Table 5 and FIG. 5. As shown on Table 5, samples 4-1 to 4-7 of the optical fiber cable 10 are made. The values of $\triangle\beta$ of each of the samples 4-1 to 4-7 differ. In the column [$\triangle\beta^{-8}$], the negative eighth exponent of $\triangle\beta$ of each sample is shown. Using the value of the negative eighth exponent of $\triangle\beta$ is based off of equation (4) mentioned earlier. The column [D"] on Table 5 shows the upper limit of the packing density of the optical fibers 1a so that the value of transmission loss is equal to or less than 0.23dB/km for each sample. The [Relative Ratio] column shows a ratio where a typical value of the packing density of the optical fibers 1a of the optical fiber cables, [11pcs/mm$^2$] is set as the standard.

[Table 5]

| Sample No. | $\Delta\beta$ [rad/m] | -2p | $\Delta\beta^{-8}$ | D1"[pcs/mm$^2$] | Relative Ratio |
|---|---|---|---|---|---|
| 4-1 | 9350 | -8 | 1.71 × 10$^{-32}$ | 5.5 | 2.00 |
| 4-2 | 9400 | -8 | 1.64 × 10$^{-32}$ | 6.2 | 1.77 |
| 4-3 | 9900 | -8 | 1.08 × 10$^{-32}$ | 11 | 1.00 |
| 4-4 | 10000 | -8 | 1.00 × 10$^{-32}$ | 11 | 1.00 |
| 4-5 | 10800 | -8 | 5.40 × 10$^{-33}$ | 12 | 0.92 |
| 4-6 | 11000 | -8 | 4.67 × 10$^{-33}$ | 11.3 | 0.97 |
| 4-7 | 11500 | -8 | 3.27 × 10$^{-33}$ | 13 | 0.85 |

The horizontal axis of FIG. 5 is [$\triangle\beta^{-8}$] of Table 5, while the vertical axis is the [Relative Ratio] of Table 5. As with the derivation process for the coefficient C1, when the value of the coefficient C2 is set as the value of y in the approximation equation, and $\triangle\beta^{-8}$ to be the value of x, equation (8) below is obtained. The coefficient C2 derived from equation (8) is to convert a value of $\triangle\beta$ to the apparent packing density of the optical fibers 1a.

[Equation 8]

$$C2 = 0.665 \times e^{5.68 \times 10^{31} \times \Delta\beta^{-8}} \quad \cdots (8)$$

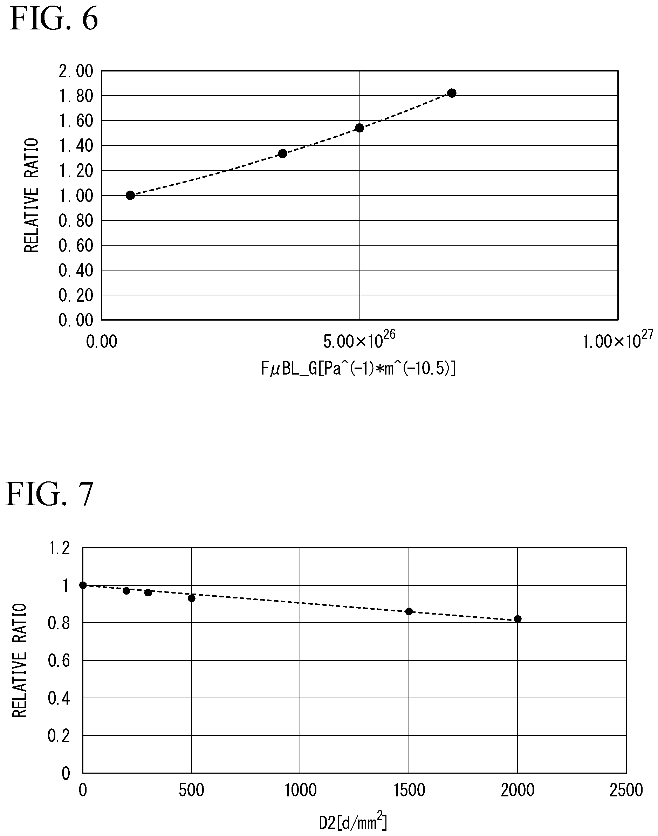

The coefficient C3 is derived from the below Table 6 and FIG. 6. As shown on Table 6, samples 5-1 to 5-5 of the optical fiber cable 10 are made. In each of the samples 5-1 to 5-5, the value of $\triangle\beta$, 9,350 (rad/m), is shared among the samples, however the design of the primary layer 12 and the secondary layer 13 differs, causing the values of the geometric loss factor $F_{\mu BL\_G}$ to differ. D1" on Table 6 has the same meaning as it does on Table 5. Column [Relative Ratio] shows the ratio where the smallest amount of the value of the geometric loss factor $F_{\mu BL\_G}$ (in other words, where micro-bends are least likely to form) of sample 5-5 is set as the standard.

[Table 6]

| Sample No. | $F_{\mu BL\_G}$ | D1" [pcs/mm²] | Relative Ratio |
|---|---|---|---|
| 5-1 | $6.78 \times 10^{26}$ | 5.5 | 1.82 |
| 5-2 | $4.99 \times 10^{26}$ | 6. 5 | 1. 54 |
| 5-3 | $3.51 \times 10^{26}$ | 7.5 | 1. 33 |
| 5-4 | $5.51 \times 10^{25}$ | 10 | 1.00 |
| 5-5 | $5.47 \times 10^{25}$ | 10 | 1.00 |

The horizontal axis of FIG. 6 is [$F_{\mu BL\_G}$] of Table 6, while the vertical axis of FIG. 6 is the [Relative Ratio] of Table 6. As with the derivation process for the coefficient C1, when the value of the coefficient C3 is set as the value of y in the approximation equation of the graph on FIG. 6, and $F_{\mu BL\_G}$ is set as the value of x, equation (9) below is obtained. The coefficient C3 derived from equation (9) is to convert a value of $F_{\mu BL\_G}$ to the apparent packing density of the optical fibers 1a.

[Equation 9]

$$C3 = 0.949 \times e^{9.63 \times 10^{-28} \times F_{\mu BL\_G}} \quad \cdots (9)$$

The coefficient C4 is derived from the below Table 7 and FIG. 7. As shown on Table 7, samples 6-1 to 6-6 of the optical fiber cable 10 are made. Although in each of the samples 6-1 to 6-6, the stuffing amount of the filling material 4 differs, the value of the packing density D1 of the optical fibers 1a is designed to be similar. When D1 is similar, as the amount of stuffing of the filling material 4 becomes larger, the cushioning ability increases, and the transmission loss decreases. As with the derivation process of the coefficient C1, the transmission loss of each of the samples is measured, and using the previously mentioned conversion equation, the apparent packing density D1' of the optical fibers 1a is derived. Column [Relative Ratio] shows the ratio of the value of D1', where the standard is sample 6-1 that is not stuffed with the filling material 4.

[Table 7]

| Sample No. | D2[d/mm²] | D1 [pcs/mm²] | Transmission [dB/km] Loss | D1' [pcs/mm²] | Relative Ratio |
|---|---|---|---|---|---|
| 6-1 | 0 | 10 | 0.215 | 10 | 1 |
| 6-2 | 200 | 10 | 0.211 | 9.7 | 0.97 |
| 6-3 | 300 | 10 | 0.210 | 9.6 | 0.96 |
| 6-4 | 500 | 10 | 0.205 | 9.3 | 0.93 |
| 6-5 | 1500 | 10 | 0.195 | 8.6 | 0.86 |

(continued)

| Sample No. | D2[d/mm$^2$] | D1 [pcs/mm$^2$] | Transmission [dB/km] Loss | D1' [pcs/mm$^2$] | Relative Ratio |
|---|---|---|---|---|---|
| 6-6 | 2000 | 10 | 0.189 | 8.2 | 0. $2 |

The horizontal axis of FIG. 7 is [D2] of Table 7, while the vertical axis of FIG. 7 is the [Relative Ratio] of Table 7. As with the derivation process for the coefficient C1, when the value of the coefficient C4 is set as the value of y in the approximation equation of the graph on FIG. 7, and D2 is set as the value of x, equation (10) below is obtained. The coefficient C4 derived from equation (10) is to convert a value of the cushioning ability of the filling material 4 to the apparent packing density of the optical fibers 1a.

[Equation 10]

$$C4 = -9.40 \times 10^{-5} \times D2 + 1 \qquad \cdots (10)$$

On Table 1 and Table 2, the column [D1×C1×C2×C3×C4] shows the previously mentioned actual packing density D1 of the actual optical fiber 1a, multiplied by each of the coefficients C1 to C4. This value is referred to as the [Index Q] throughout the present description (refer to equation (11) below).

[Equation 11]

$$Q = D1 \times C1 \times C2 \times C3 \times C4 \qquad \cdots (11)$$

On the column [Optical Losses] of Table 1 and Table 2, the measurement results of the transmission losses at the measured wave length 1.55μm are shown.

On Table 1 and Table 2, on the column [Fiber Pulling Force], the measured results of the pulling force (referred to as the "fiber pulling force" below) applied when pulling the optical fibers 1a from each sample of the optical fiber cables (length 10m) are shown. When the fiber pulling force is equal to or greater than 15N/10m, the frictional forces acting on the optical fibers 1a is sufficient, suppressing the protrusion of the optical fibers 1a from the sheath 5 as the optical fibers 1a exceed the allowable range on an end in the longitudinal direction of the optical fiber cable for example.

Regarding samples 1-1, 1-4, 1-5, 1-11, 1-12, 1-13, 1-14, 1-17, 1-18, 1-19 and 1-22, the value of the optical losses is less than 0.23dB/km, while the fiber pulling force is equal to or greater than 15N/10m. For this reason, in these samples, on the [Judgment] column, where the performance was good, OK is shown. A common point that is mentioned between samples with an OK judgment is that, the value of the index Q is less than 20, and the fiber pulling force is equal to or greater than 15N/10m. Thus, it is understood that by fulfilling these requirements, it is possible to obtain an optical fiber cable 10 which the magnitude of micro-bend losses is that which can be tolerated in actual use, taking into account the amount of the filling material 4, the geometric and the optical properties (△β) of the optical fiber 1a and so on, along with the adequate frictional forces acting on the optical fiber 1a.

Based on the above, the optical fiber cable 10 that the inventors of the present invention are proposing, includes the sheath 5, and the core 8 containing a plurality of the optical fibers 1a in a state where the optical fibers 1a are twisted together and packed within the accommodation space in the sheath 5, in which each of the plurality of the optical fibers 1a contains the glass portion 11, the primary layer 12 that covers the glass portion 11, and the secondary layer 13 that covers the primary layer 12, and a value of the index Q is less than 20, and a fiber pulling force when pulling out the optical fiber 1a is equal to or greater than 15N/10m. In this manner, the optical fiber cable 10 where the frictional forces acting on the optical fibers 1a is maintained, while having good light transmission characteristics during actual use conditions is provided.

Furthermore, in either case where the filling material 4 is not provided (for example sample 1-1) or the filling material 4 is provided (for example sample 1-11), it is possible to fulfill the conditions where the index Q is less than 20, and the fiber pulling force is equal to or greater than 15N/10m. Therefore, the filling material 4 may or may not be disposed on the inner part of the sheath 5.

Furthermore, the technical scope of the present invention is not limited to any of the previously mentioned embodiments, and various modifications can be made without departing from a spirit of the present invention.

For example, in the embodiments, although the case of the optical fibers 1a being the intermittently-fixed optical fiber ribbon is explained, it can be understood that in a case where a plurality of single optical fibers 1a are bundled and twisted together, where the value of the index Q is less than 20, and the fiber pulling force is equal to or greater than 15N/10m, similar effects can be obtained.

Also, the wrapping tube 2 may not be provided. In this case, the sum of cross-sectional areas of the wrapping tube 2 is not included in the value of A in equation (5).

Also, in the optical fiber cable 10 of the previously mentioned embodiment, the entire region surrounded by the inner circumferential surface of the sheath 5 was designated as the accommodation area. However, the explained conditions of the previously mentioned embodiments are also applicable to slot-type cables or loose tube cables. For a slot-type cable, the core 8 includes a slot element where a plurality of grooves (slots) are formed, and the optical fibers 1a in a state where the optical fibers 1a have been twisted together are packed in the accommodation space of the grooves. Therefore, the inner side of the grooves formed in the slot element is the accommodation space, and N of equation (5) is the quantity of the optical fibers 1a that are packed in the accommodation space of the grooves, S is the sum of the transverse cross-sectional areas of the inner side of the grooves. In the case of the loose tube cable, in the core 8, a plurality of the loose tubes are included, each of the loose tubes having the optical fibers 1a in a state where the optical fibers 1a are twisted together and packed in the loose tubes. Therefore, the inner side of the loose tubes is the accommodation space, N of equation (5) is the quantity of the optical fibers 1a that are packed in the loose tubes, S is the sum of the transverse cross-sectional areas of the inner side of the loose tubes.

Otherwise, where the objective of the technical scope of the present invention is not departed from, where it is possible and appropriate, the components of the previously mentioned present invention may be substituted for well-known components. Also, modifications of the previously mentioned embodiments may be appropriately combined.

[Explanation of Reference Symbols]

1a    Optical Fibers
2     Wrapping Tube
4     Filling Material
5     Sheath
8     Core
10    Optical Fiber Cable

## Claims

1. An optical fiber cable comprising:

   a sheath; and
   a core including a plurality of optical fibers in a state where the optical fibers are twisted together and are packed in an accommodation space in the sheath;
   wherein the plurality of optical fibers each contains a glass portion, a primary layer that covers the glass portion, and a secondary layer that covers the primary layer,
   a value of an index Q defined by the following Equations (3), (5), (6), (7), (8), (9), (10) and (11) is less than 20, and
   a fiber pulling force when pulling out the optical fibers is equal to or greater 15 N/10m,
   [Equation 3]

$$F_{\mu BL\_G} = \frac{K_s}{H_f{}^2 \times D_0{}^{0.375} H_0{}^{0.625}} \quad \cdots (3)$$

$$K_s = \frac{E_p d_f}{t_p}, \; H_f = \frac{\pi}{4} E_g \left(\frac{d_f}{2}\right)^4, \; D_0 = E_p + \left(\frac{t_s}{R_s}\right)^3 E_s, \; H_0 = \frac{\pi}{4} E_s \left(R_s{}^4 - R_p{}^4\right)$$

   [Equation 5]

$$D1 = N \div (S - A) \quad \cdots (5)$$

   [Equation 6]

$$D2 = T \div S \quad \cdot\cdot\cdot (6)$$

[Equation 7]

$$C1 = 3.17 \times 10^{-7} \times (D2)^2 - 4.50 \times 10^{-4} \times D2 + 1.03 \quad \cdot\cdot\cdot (7)$$

[Equation 8]

$$C2 = 0.665 \times e^{5.68 \times 10^{31} \times \Delta \beta^{-8}} \quad \cdot\cdot\cdot (8)$$

[Equation 9]

$$C3 = 0.949 \times e^{9.63 \times 10^{-28} \times F_{\mu Bl\_G}} \quad \cdot\cdot\cdot (9)$$

[Equation 10]

$$C4 = -9.40 \times 10^{-5} \times D2 + 1 \quad \cdot\cdot\cdot (10)$$

[Equation 11]

$$Q = D1 \times C1 \times C2 \times C3 \times C4 \quad \cdot\cdot\cdot (11)$$

where $E_P$ [MPa] is Young modulus of the primary layer 12,
df [μm] is an outer diameter of the glass portion,
$E_g$ [GPa] is Young's modulus of the glass portion,
$R_S$ [μm] is a radius of an outer periphery of the secondary layer,
ts [μm] is a thickness of the secondary layer,
$E_S$ [MPa] is Young's modulus of the secondary layer,
$R_P$ [μm] is a radius of outer periphery of the primary layer,
N [pcs] is a quantity of the optical fibers packed in the accommodation space,
S [mm$^2$] is a transverse cross-sectional area of the accommodation space,
A [mm$^2$] is a sum of transverse cross-sectional areas of elements, with the exception of the optical fibers, disposed in the accommodation space,
T [d] is a total denier of filling material when the filling material is disposed in the accommodation space, and
$\Delta\beta$ (rad/m) is a difference between a propagation constant in a waveguide mode of transmitted light that propagates in the optical fibers, and a propagation constant of a radiation mode.

2. An optical fiber cable according to claim 1,
   wherein the filling material is disposed in the accommodation space.

# FIG. 1

FIG. 2

FIG. 3

RELATIONSHIP BETWEEN PACKING DENSITY AND TRANSMISSION LOSS

## FIG. 4

## FIG. 5

FIG. 6

FIG. 7

## INTERNATIONAL SEARCH REPORT

| International application No. |
|---|
| **PCT/JP2021/031193** |

**A. CLASSIFICATION OF SUBJECT MATTER**

*G02B 6/44*(2006.01)i
FI: G02B6/44 366

According to International Patent Classification (IPC) or to both national classification and IPC

**B. FIELDS SEARCHED**

Minimum documentation searched (classification system followed by classification symbols)

G02B6/02-6/036; G02B6/44

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2010-217392 A (FUJIKURA LTD) 30 September 2010 (2010-09-30) paragraphs [0017]-[0043], fig. 1-2 | 1-2 |
| Y | JP 2015-131733 A (SUMITOMO ELECTRIC INDUSTRIES) 23 July 2015 (2015-07-23) paragraphs [0010]-[0054], fig. 8 | 1-2 |
| Y | JP 2018-081328 A (FUJIKURA LTD) 24 May 2018 (2018-05-24) paragraphs [0011]-[0087], fig. 1-6 | 1-2 |
| Y | JP 2019-031422 A (FUJIKURA LTD) 28 February 2019 (2019-02-28) paragraphs [0010]-[0076] | 1-2 |
| Y | JP 2000-131571 A (SUMITOMO ELECTRIC IND LTD) 12 May 2000 (2000-05-12) paragraphs [0008]-[0024], fig. 1-2 | 2 |
| A | JP 2014-139609 A (FUJIKURA LTD) 31 July 2014 (2014-07-31) paragraphs [0001]-[0044], fig. 1-7 | 1-2 |
| A | US 2005/0013573 A1 (LOCHKOVIC et al.) 20 January 2005 (2005-01-20) paragraphs [0092], [0137], fig. 27, 54 | 1-2 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

International application No.

**PCT/JP2021/031193**

| Patent document cited in search report | | | Publication date (day/month/year) | Patent family member(s) | | | Publication date (day/month/year) |
|---|---|---|---|---|---|---|---|
| JP | 2010-217392 | A | 30 September 2010 | WO | 2010/106858 | A1 | |
| | | | | TW | 201100890 | A1 | |
| JP | 2015-131733 | A | 23 July 2015 | US | 2015/0192734 | A1 | |
| | | | | paragraphs [0015]-[0060], fig. 8 | | | |
| | | | | CN | 104777550 | A | |
| JP | 2018-081328 | A | 24 May 2018 | US | 2019/0113678 | A1 | |
| | | | | paragraphs [0017]-[0121], fig. 1-6 | | | |
| | | | | EP | 3438715 | A1 | |
| | | | | CN | 108885303 | A | |
| JP | 2019-031422 | A | 28 February 2019 | US | 2019/0047238 | A1 | |
| | | | | paragraphs [0013]-[0123] | | | |
| | | | | CN | 109384383 | A | |
| JP | 2000-131571 | A | 12 May 2000 | US | 6411761 | B1 | |
| | | | | column 3, line 35 to column 7, line 42, fig. 1-2 | | | |
| JP | 2014-139609 | A | 31 July 2014 | (Family: none) | | | |
| US | 2005/0013573 | A1 | 20 January 2005 | CN | 1950736 | A | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020147729 A

- JP 2014139609 A

### Non-patent literature cited in the description

- **J. BALDAUF et al.** Relationship of Mechanical Characteristics of Dual Coated Single Mode Optical Fibers and Microbending Loss. *IEICE Trans. Commun.,* 1993, vol. E76-B (4
- **K. PETERMANN et al.** Upper and Lower Limits for the Microbending Loss in Arbitrary Single-Mode Fibers. *J. Lightwave technology,* 1986, vol. LT-4 (1), 2-7

- **P. SILLARD et al.** Micro-Bend Losses of Trench-Assisted Single-Mode Fibers. *ECOC2010,* 2010
- **K. KOBAYASHI et al.** Study of Microbending loss in thin coated fibers and fiber ribbons. *IWCS,* 1993, 386-392
- **C. D. HUSSEY et al.** Characterization and design of single-mode optical fibres. *Optical and Quantum Electronics,* 1982, vol. 14 (4), 347-358